# EUROPEAN PATENT APPLICATION

(11) **EP 4 333 448 A1**
(43) Date of publication of application: **06.03.2024**
(21) Application number: 23192119.8
(22) Date of filing: 18.08.2023
(51) Int. Cl.: H04N 23/695, H04N 23/66, H04N 23/60, H04N 23/61, H04N 23/69, H04N 23/698, G06V 20/00, H04N 7/18

(54) **CONTROL APPARATUS, IMAGE PICKUP APPARATUS, CONTROL METHOD, AND PROGRAM**

(30) Priority: 31.08.2022 JP 2022137526
(71) Applicant: CANON KABUSHIKI KAISHA, Tokyo 146-8501 (JP)
(72) Inventor: HORI, Takuya, Tokyo, 146-8501 (JP)
(74) Representative: TBK

(57) **Abstract**

A control apparatus (201) for a system configured to transition between a first state for changing an angle of view of an image pickup apparatus (100) according to an operation of a user and a second state for changing the angle of view so that an object is displayed at a target position on an image includes an acquiring unit (201a) configured to acquire a position of the object on the image, and a determining unit (201b) configured to determine the target position based on the position of the object on the image in a case where the system transitions from the first state to the second state.

## Description

### BACKGROUND

### Technical Field

One of the aspects of the embodiments relates to a control apparatus, an image pickup apparatus, a control method, and a program.

### Description of Related Art

One of the recently proposed systems enables an operator to control pan and tilt operations of a single camera, and the camera including artificial intelligence (AI) to automatically track an object based on its own determination and reasoning. Japanese Patent Laid-Open No. 2005-86360 discloses a configuration that can switch between imaging for automatically tracking an object (automatic imaging) and imaging for enabling manual control of panning and tilting operations (manual imaging). Japanese Patent No. 5317607 discloses a configuration that sets a position of a mark displayed on a screen (image) as a position for outputting a tracked object in an automatic tracking camera.

However, the configuration disclosed in Japanese Patent Laid-Open No. 2005-86360 fixes an angle of view in switching from manual imaging to automatic imaging. Although the configuration disclosed in Japanese Patent No. 5317607 can resolve the circumstance of this fixed angle of view, the operator simultaneously performs the camera operation and the operation of designating the output position of the tracked object, and the operation becomes complicated.

### SUMMARY

The present invention in its first aspect provides a control apparatus as specified in claims 1 to 10.

The present invention in its second aspect provides an image pickup apparatus as specified in claim 11.

The present invention in its third aspect provides a system as specified in claim 12.

The present invention in its fourth aspect provides a control method as specified in claim 13.

The present invention in its fifth aspect provides a program as specified in claim 14.

Further features of the disclosure will become apparent from the following description of embodiments with reference to the attached drawings.

### BRIEF DESCRIPTION OF THE DRAWINGS

FIG. 1 is a configuration diagram of a system according to one embodiment.
FIGs. 2A and 2B illustrate block configurations of each apparatus.
FIGs. 3A and 3B are flowcharts illustrating an operation of a workstation and a camera.
FIG. 4 illustrates an operation of a controller.
FIG. 5 illustrates states and transition conditions of the workstation according to a first embodiment.
FIG. 6 is a flowchart illustrating processing for setting a target position according to the first embodiment.
FIG. 7 is a flowchart illustrating processing for acquiring an object size according to a second embodiment.
FIG. 8 is a flowchart illustrating processing for setting a zoom magnification according to the second embodiment.
FIG. 9 is a flowchart illustrating an operation of the workstation according to a third embodiment.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of embodiments. Those elements, which are corresponding elements in respective figures, will be designated by the same reference numerals, and a duplicate description thereof will be omitted.

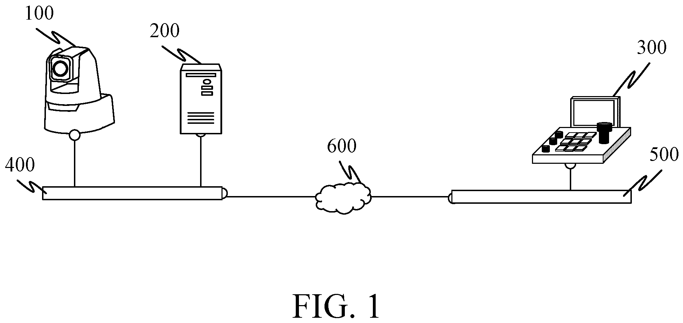

FIG. 1 is a configuration diagram of a system according to one embodiment. The system includes a camera (image pickup apparatus) 100, a workstation 200, and a controller (operation apparatus) 300. The system is configured to transition between a first state for changing an angle of view of the camera 100 by an operation of a user, and a second state for changing the angle of view of the camera 100 so that an object to be tracked is displayed at a target position on an image.

The camera 100 and workstation 200 are connected via a LAN (Local Area Network) 400. The controller 300 is connected to a LAN 500. The LANs 400 and 500 are connected via an Internet 600. Due to this configuration, each apparatus can communicate with each other.

The camera 100 distributes a captured image to each apparatus via each network or image cable. The camera 100 has a mechanism for performing pan and tilt operations relative to an imaging unit configured to capture an object.

The workstation 200 detects an object from an image delivered from the camera 100, and sends a control signal for tracking the object via the LAM 400 to change an imaging direction of the camera 100 based on the detection result, and the like. The camera 100 may have at least one function of the workstation 200.

The controller 300 accesses the camera 100 via the Internet 600 to acquire images and control the camera 100 based on user operations.

In the system according to this embodiment, while the workstation 200 controls the camera 100 to track the object based on the image, the user can change the imaging direction of the camera 100 to a desired direction by remotely operating the controller 300.

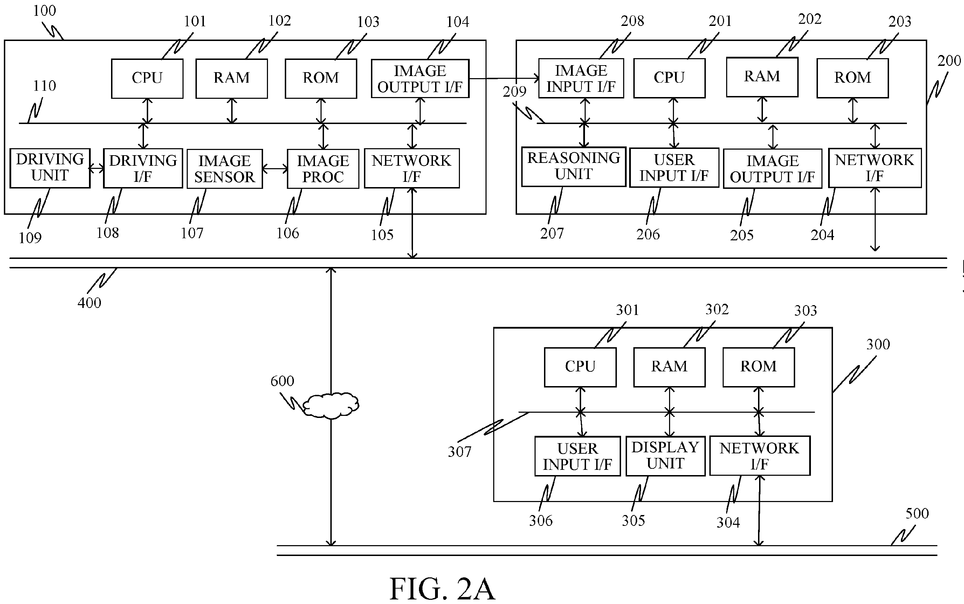

FIG. 2A illustrates a block configuration of each apparatus. The camera 100 includes a CPU 101, a RAM 102, a ROM 103, an image output interface (I/F) 104, network I/F 105, an image processing unit 106, an image sensor 107, a driving I/F 108, and a driving unit 109. The CPU 101, RAM 102, ROM 103, image output I/F 104, network I/F 105, image processing unit 106, and driving I/F 108 are interconnected via an internal bus 110.

The CPU 101 controls the camera 100 as a whole.

The RAM 102 is a readable and writable high-speed storage device such as a DRAM, loaded with the OS, various programs, and various data, and used as a work area for the OS and various programs.

The ROM 103 is a nonvolatile memory such as a flash memory, HDD, SSD, and SD card, and is used as a permanent memory area for the OS, various programs, and various data, and as a short-term memory area for various data.

The image output I/F 104 is an interface for outputting an image captured by the image sensor 107 to the outside. The image output I/F 104 includes Serial Digital Interface (SDI) or High-Definition Multimedia Interface (HDMI) (registered trademark). The image output I/F 104 is connected to an image input I/F (image input means) 208 of the workstation 200, which will be described below.

The image processing unit 106 is connected to an image sensor 107 consisting of a CCD or CMOS, converts image data acquired from the image sensor 107 into a predetermined format, compresses it if necessary, and transfers it to the RAM 102. The image processing unit 106 also performs image quality adjustment such as zooming, focusing, and exposure control in acquiring the image data from the image sensor 107, and crop processing for cutting out only a predetermined area of the image data. These processes are executed according to instructions via the network I/F 105 from an external device such as the workstation 200 or the controller 300.

The network I/F 105 is an I/F for connecting with the LAN 400, and is responsible for communication with external devices such as the workstation 200 and the controller 300 via a communication medium such as Ethernet (registered trademark). The remote control of the camera 100 may be performed via the network I/F 105 or via another I/F such as an unillustrated serial communication I/F.

The driving I/F 108 is a connector with the driving unit 109 and is responsible for communication for transmitting and receiving control signals and the like to the driving unit 109.

The driving unit 109 includes a mechanical driving system, a driving source motor, etc., and changes the imaging direction of the camera 100 and the position of the lens unit for zooming. The driving unit 109 rotates such as panning and tilting to direct the angle of view toward the horizontal direction or the vertical direction based on an instruction received from the CPU 101 via the driving I/F 108, and performs a zoom operation for changing a range of the imaging angle of view.

The workstation 200 includes a CPU 201, a RAM (recorder) 202, a ROM 203, a network I/F 204, an image output I/F 205, a user input I/F 206, a reasoning unit (detector) 207, and an image input I/F (image acquiring unit) 208. The CPU 201, RAM 202, ROM 203, network I/F 204, image output I/F 205, user input I/F 206, reasoning unit 207, and image input I/F 208 are interconnected via an internal bus 209.

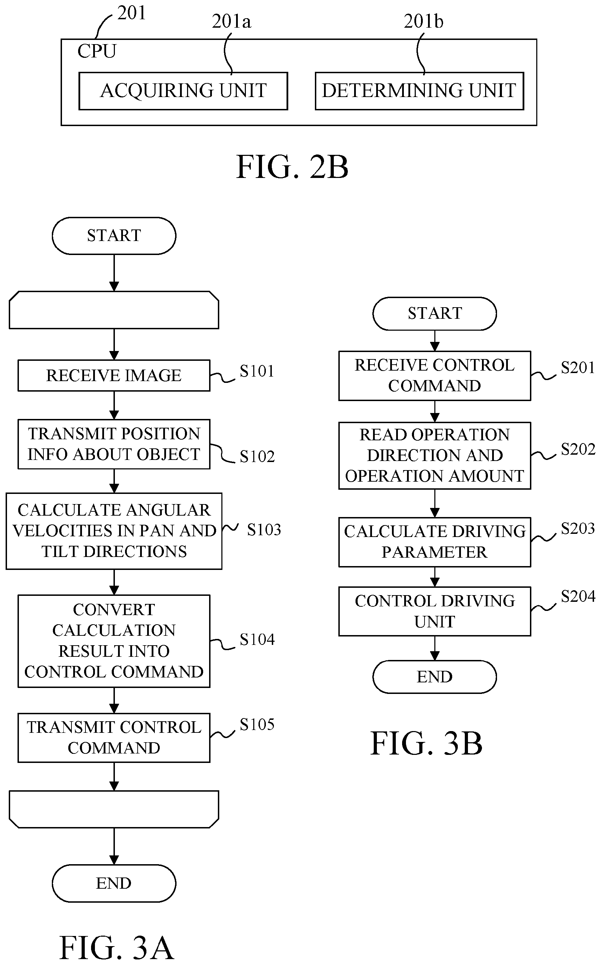

The CPU 201 controls the entire workstation 200. The CPU 201 includes an acquiring unit 201a and a determining unit 201b, as illustrated in FIG. 2B. The acquiring unit 201a acquires a position of an object, which is a target to be tracked, on an image. The determining unit 201b determines the target position based on the object position on the image in a case where the system transitions from the first state to the second state. The CPU 201 is installed in the workstation 200 in this embodiment, but may be configured as a control apparatus separate from the workstation 200 or may be installed in the camera 100 or the controller 300.

The RAM 202 is a readable and writable high-speed memory such as a DRAM, loaded with an OS, various programs, and various data, and used as a work area for the OS and various programs.

The ROM 203 is a nonvolatile memory such as a flash memory, HDD, SSD, and SD card, and is used as a permanent memory area for the OS, various programs, and various data, and as a short-term memory area for various data.

The network I/F 204 is an I/F for connection to the LAN 400, and is responsible for communication with an external device such as the camera 100 and controller 300 via a communication medium such as Ethernet (registered trademark).

The image output I/F 205 is an interface for outputting a setting information screen of the workstation 200 and the like.

The user input I/F 206 includes a Universal Serial Bus (USB) or the like, and is an interface for connection to a mouse, a keyboard, and another input device.

The reasoning unit 207 includes a calculation unit specialized for image processing and reasoning processing, such as a Graphics Processing Unit (GPU), and reasons the position and presence or absence of a predetermined object in an image from the image received from the image input I/F 208 or the like. Although it is generally effective to use a GPU for learning processing, a reconfigurable logic circuit such as an Field-Programmable Gate Array (FPGA) may also be used. The processing of the reasoning unit 207 may be performed by the CPU 201.

The image input I/F 208 receives an image from the camera 100. In this embodiment, the image input I/F 208 includes SDI or HDMI.

The controller 300 includes a CPU 301, a RAM 302, a ROM 303, a network I/F 304, a display unit 305, and a user input I/F 306. The CPU 301, RAM 302, ROM 303, network I/F 304, display unit 305, and user input I/F 306 are interconnected via an internal bus 307.

The CPU 301 controls the entire controller 300.

The RAM 302 is a readable and writable high-speed memory such as a DRAM, in which the OS, various programs, and various data are loaded, and used as a work area for the OS and various programs.

The ROM 303 is a nonvolatile memory such as a flash memory, HDD, SSD, and SD card, and is used as a permanent memory area for the OS, various programs, and various data, and as a short-term memory area for various data.

The network I/F 304 is an I/F for connection to the LAN 500, and is responsible for communication with an external device such as the camera 100 and the workstation 200 via a communication medium such as Ethernet (registered trademark). Here, communication means transmission and reception of a control command to the camera 100 and the controller 300 and reception of an image from the camera 100.

The display unit 305 displays an image from the camera 100 and a setting screen of the controller 300. Although the controller 300 has the display unit 305 in this embodiment, this embodiment is not limited to this example. For example, a display monitor and a controller that only display images may be provided.

The user input I/F 306 is an interface for receiving a user operation on the controller 300, and includes, for example, a button, a dial, a joystick, and a touch panel. The user input I/F 306 receives, for example, input for pan and tilt control over the camera 100 based on the user operation.

A description will now be given of an operation of controlling the camera 100 to track an object detected by the workstation 200 and an operation of controlling the camera 100 by the controller 300, which are basic operations in the system according to this embodiment.

Referring now to FIGs. 3A and 3B, a description will be given of an operation of causing the camera 100 to track the object detected by the workstation 200. FIGs. 3A and 3B are flowcharts illustrating operations of workstation 200 and camera 100.

FIG. 3A illustrates loop processing in which the workstation 200 receives images sequentially transmitted from the camera 100 via the image input I/F 208, identifies the object position using the images, and controls the camera 100 to track the object.

In step S101, the CPU 201 receives images captured by the camera 100 via the image input I/F 208. Images are sequentially transmitted from the image output I/F 104 at a predetermined frame rate, and the image input I/F 208 sequentially writes the received images into the RAM 202. Images may also be received via the network I/F 204 and developed in the RAM 202.

In step S 102, first, the CPU 201 reads an image from the RAM 202 and inputs it into the reasoning unit 207. Next, the reasoning unit 207 writes position information about the obj ect to be tracked into the RAM 202 as the reasoning result. The reasoning unit 207 has a trained model created using a machine learning method such as deep learning, receives an image as input data, and outputs as output data a score indicating the type, position information, and likelihood of the target to be tracked such as a person. This embodiment uses a rectangular frame circumscribing the detected object as the position information output by the reasoning unit 207. The rectangular frame is indicated by positional coordinates on an orthogonal coordinate system superimposed on an input image, and is uniquely designated by the upper left positional coordinates and the lower right positional coordinates of the rectangular frame. The positional coordinates use values normalized so that the upper left corner of the image is set to the origin of the coordinates and 1 is the lower right corner of the image. Therefore, any point on the image is represented by a set of numerical values represented by (pan position, tilt position). The upper left of the image is set to (0, 0), the lower right is set to (1, 1), and the center of the image (center position of the image) is set to (0.5, 0.5). The rectangular frame may be indicated by the center-of-gravity positional coordinates of the four points forming the rectangular frame, or may be indicated by other positional coordinates that uniquely define the rectangular frame. Next, the CPU 201 transmits the information written in the RAM 202 to the camera 100.

In step S 103, the CPU 201 first calculates a difference between the position information about the object acquired from the reasoning unit 207 in step S 102 and the target position of the object, which will be described below. Next, the CPU 201 calculates angular velocities in the pan and tilt directions according to the difference for tracking the object. The larger the difference becomes, that is, the farther the object position in the image becomes from the target position, the higher the calculated angular velocities in the pan and tilt directions become. In this embodiment, the angular velocity linearly increases according to a distance between the object position and the target position of the object in the image, but another relationship may be used.

The tracking operation is realized by setting a predetermined position in the image as the target position of the object and panning and tilting the camera 100 so that the object is captured at the target position. For example, in a case where the target position is the image center (0.5, 0.5), the CPU 201 performs the tracking operation so that the object to be tracked is captured at the image center.

The user can designate an arbitrary position in the image as the target position via the user input I/F 206, and the target positional coordinates are stored in the RAM 202. The object to be tracked is transmitted to the workstation 200 by the user through the user input I/F 206. The target position and the tracking target may be specified from the controller 300 or an unillustrated external device connected to the Internet 600 via the network I/F 204.

In a case where the result output by the reasoning unit 207 includes a prespecified type such as a person, the target acquired by the CPU 201 may be specified as a target to be tracked. In a case where the result output by the reasoning unit 207 includes a plurality of types of targets to be tracked, the largest target, a target closest to the image center, and a target with the highest probability of the reasoning result may be specified as the tracking target.

In step S104, the CPU 201 converts the result calculated in step S 103 into a control command according to a protocol predefined as a method of controlling the camera 100 and writes it into the RAM 202.

In step S105, the CPU 201 reads the control command converted in step S104 and written into the RAM 202, transmits it to the camera 100 via the network I/F 204, and returns to the beginning of the loop processing.

In step S103, a so-called dead zone may be provided in which the camera 100 is not controlled in a case where the difference is within a predetermined range, so as to avoid the camera 100 from being excessively controlled.

FIG. 3B illustrates the operational flow of the camera 100 in a case where a control command is received from the workstation 200.

In step S201, the CPU 101 receives the control command via the network I/F 105.

In step S202, in a case where the CPU 101 receives the control command, the CPU 101 reads values corresponding to the pan direction and tilt direction for the operation directions and the operation amounts (angular velocities).

In step S203, the CPU 101 calculates driving parameters for panning and tilting in desired directions at desired speeds based on the values read out in step S201. More specifically, the driving parameters are parameters for controlling respective motors (not illustrated) in the pan direction and tilt direction included in the driving unit 109, and may be converted by referring to the conversion table previously stored in the ROM 103 based on the operation amounts included in the received control command.

In step S204, the CPU 101 controls the driving unit 109 via the driving I/F 108 based on the driving parameters calculated in step S203. Rotating the driving unit 109 based on the driving parameters can provide pan and tilt operations for changing the imaging directions of the camera 100.

The driving control described with reference to FIGs. 3A and 3B can also be applied to a zoom mechanism.

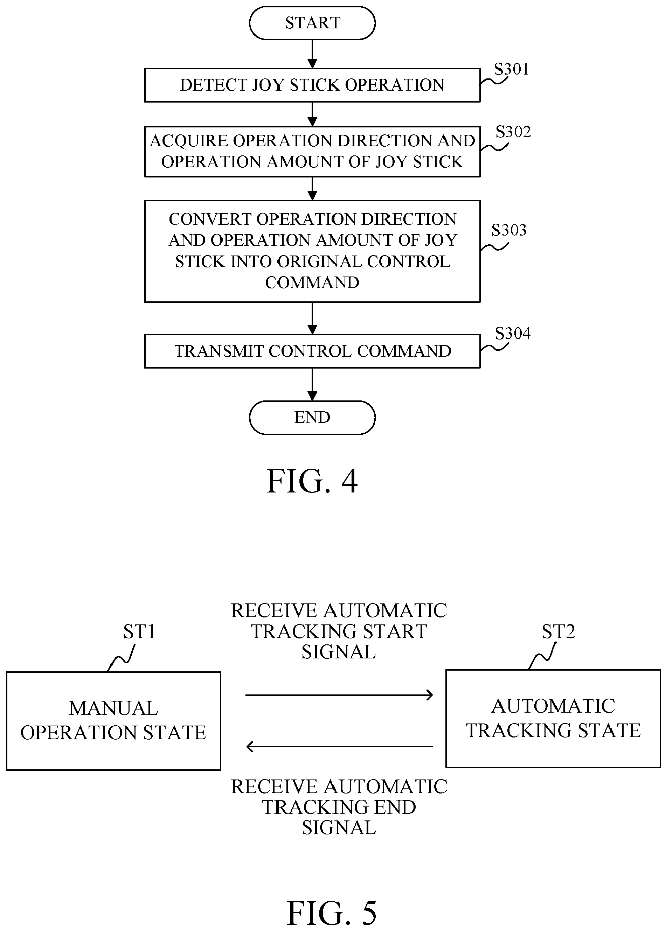

Referring now to FIG. 4, a description will be given of an operation of controlling the camera 100 based on the operation to the controller 300. FIG. 4 illustrates the operation of the controller 300.

The camera 100 is controlled based on the control command transmitted from the controller 300, but the operation of the camera 100 is similar to that described with reference to FIG. 3B, and a description thereof will be omitted.

In step S301, the CPU 301 detects a joystick operation of the user via the user input I/F 306.

In step S302, the CPU 301 acquires the operation direction and operation amount of the joystick from the user input I/F 306. A specific example of a joystick specification includes an analog output specification that uses voltage output from a variable resistor provided in each of the pan and tilt directions. The CPU 301 can acquire the respective angular velocities in the pan direction and the tilt direction by reading out the voltage input from the joystick as a digital value obtained via an A/D converter (not illustrated). The A/D converter can read out values in a predetermined range, such as 0 to 1023, as values corresponding to angular velocities in the pan and tilt directions according to the operation amounts.

In step S303, the CPU 301 converts the angular velocities in the pan and tilt directions based on the result obtained in step S302 into control commands in accordance with the protocol predefined as the method of controlling the camera 100, and writes them into the RAM 102.

In step S304, the CPU 301 reads out the control commands converted in step S303 and written into the RAM 102, and transmits them to the camera 100 via the network I/F 105. The control commands may be transmitted to the camera 100 via the workstation 200. That is, the control commands may be transmitted from the workstation 200 to camera 100 after they are received by the workstation 200 via the network I/F 105. The control commands may be sent to the camera 100 and the workstation 200 at the same time.

### FIRST EMBODIMENT

This embodiment will explain a method for determining a target position for automatic tracking.

FIG. 5 illustrates states and transition conditions of the workstation 200 in this embodiment. The workstation 200 is configured to be able to transition between a manual operation state ST1 and an automatic tracking state ST2 by an operation of the user. In FIG. 5, the workstation 200 is in a state where the image input I/F 208 is in a state of sequentially updating and keeping the result detected by the reasoning unit 207 based on the images received from the camera 100.

In a case where the workstation 200 receives an automatic tracking start signal in the manual operation state ST1, the workstation 200 transitions to the automatic tracking state ST2 and starts the automatic tracking operation including the detection of the object on the image. The automatic tracking start signal may be input into the workstation 200 through the user input I/F 206 by the user, or may be input to the workstation 200 through the user input I/F 306 and the Internet 600. The workstation 200 may transition to the automatic tracking state ST2 in a case where the workstation 200 receives a control signal from an external device such as a camera switching apparatus. The workstation 200 may transition to the automatic tracking state ST2 in a case where the state in which the workstation 200 does not detect the operation of the user continues for a predetermined time, or in a case where the reasoning unit 207 detects an arbitrary type specified by the user. For example, in a case where a person is specified as the arbitrary type, the workstation 200 remains in the manual operation state ST1 in a case where the reasoning unit 207 does not detect a person, and transitions to the automatic tracking state ST2 in a case where the reasoning unit 207 detects the person without receiving the automatic tracking start signal.

In a case where the workstation 200 receives an automatic tracking end signal or a manual operation signal from the controller 300 in the automatic tracking state ST2, the workstation 200 transitions to the manual operation state ST1. The workstation 200 may transition to the manual operation state ST1 even in a case where the reasoning unit 207 does not detect the object to be tracked.

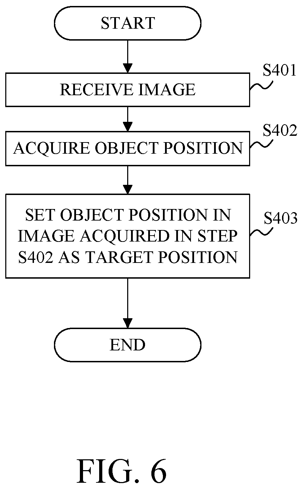

FIG. 6 is a flowchart illustrating processing of setting the target position by the workstation 200. The flow of FIG. 6 is started in a case where the workstation 200 transitions from the manual operation state ST1 to the automatic tracking state ST2. In other words, the flow of FIG. 6 starts in a case where the system transitions from the first state for changing the angle of view of the camera 100 by the operation of the user to the second state for changing the angle of view of the camera 100 so that the object is displayed at the target position on the image.

In step S401, the CPU 201 receives an image from the camera 100 via the image input I/F 208 and stores it in the RAM 202.

In step S402, the CPU 201 acquires the object position in the image detected from the reasoning unit 207 using the image stored in the RAM 202.

In step S403, the CPU 201 sets the object position in the image acquired in step S402 as the target position for displaying the object during the automatic tracking, and writes it into the RAM 202. The set target position is not limited to a position exactly equal to the object position detected by the reasoning unit 207. For example, the target position may be set so that the object is captured in 9 divisions made by vertically and horizontally dividing the image, so that the object is captured at the nearest position that satisfies the so-called third division composition, or at a predetermined position that indicates another composition. Thereby, the user can capture an image with a suitable composition by simply roughly specifying the object position without performing delicate operations.

The CPU 201 may determine whether to execute the flow of FIG. 6 depending on the positional relationship between the object and the camera 100. For example, in a case where the object is moving, the target position of the object may be set to the image center, and in a case where the object is stationary, the target position of the object may be set to the detected object position. Thereby, in a case where the object is moving, the object is kept at the center of the angle of view, and thereby the object is prevented from shifting from the angle of view.

The target position set in step S403 may be temporary. For example, the set target position may be applied only while the object continues a predetermined motion, and after the motion is completed, the target position may be reset to a predetermined target position such as the image center.

In a case where the automatic tracking start signal is received while the camera 100 is operating in the pan or tilt direction, the direction and speed of the pan or tilt operation executed just before the reception may be continuously used for a predetermined time. Thereby, the pan or tilt operation speed can be maintained while the object remains at the same position in the image before and after the automatic tracking is started.

The system may be configured so that the target position is set according to the automatic tracking start condition. For example, the system may be configured such that target position is set only with the user instruction. In this case, in a case where the user inputs the automatic tracking start signal, the target position setting according to this embodiment is executed. On the other hand, in a case where the state in which the user operation is not detected continues for a predetermined time and the state transitions to the automatic tracking state ST2, the target position setting is not executed.

By determining the tracking target position in a case where the operator switches from the manual operation to the automatic tracking, the configuration of this embodiment can capture continuous images before and after switching without any uncomfortable sense.

### SECOND EMBODIMENT

This embodiment will discuss an example that specifies the object position in the image in switching from a manual operation to automatic tracking, and changes a zoom magnification based on the object size (accounting for) in the image (referred to as object size hereinafter).

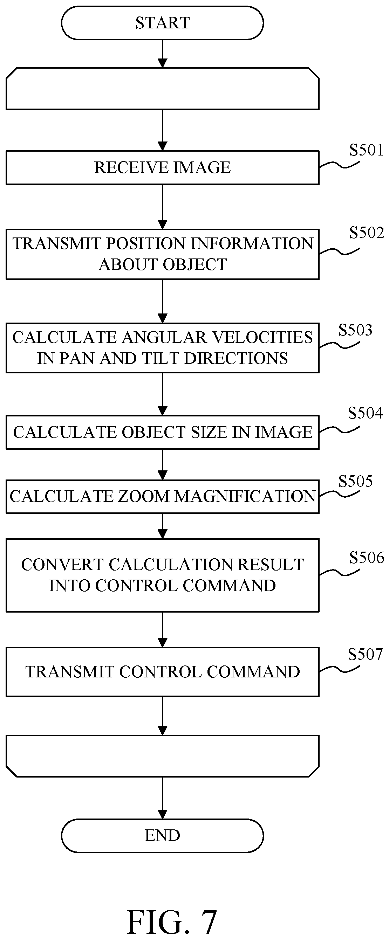

FIG. 7 is a flowchart illustrating an operation of acquiring the object size from the image according to this embodiment.

Step S501 to step S503 correspond to step S101 to step S103 in FIG. 3A, respectively, and thus a description thereof will be omitted. Steps S506 and S507 correspond to steps S 104 and S 105 in FIG. 3A, respectively, and thus a description thereof will be omitted.

In step S504, the CPU 201 reads the image from the RAM 202 and calculates the object size in the image. In this embodiment, the rectangular frame output by the reasoning unit 207 in step S502 is read out of the RAM 202, and the length of the diagonal line of the rectangular frame is set as the object size.

The detection type of the object to be automatically tracked by the reasoning unit 207 may be based on the unchanged shape of the object. For example, in a case where a whole personal body is used to automatically track a person, the size of the rectangular frame circumscribing the whole personal body changes depending on how the arms or legs of the person are spread. As a result, even if the zoom magnification is the same, the object size becomes different, and the CPU 201 may erroneously detect that the object has moved in the depth direction of the angle of view. Therefore, in automatically tracking a person, the type to be detected by the reasoning unit 207 is a part of the body such as the face of the person.

The object size may be the area of the rectangular frame or the ratio in the pan or tilt direction to the entire image.

In step S505, the CPU 201 calculates a zoom magnification for setting the camera 100 based on the object size calculated in step S504. More specifically, the CPU 201 first reads out the object size calculated in step S504 from the RAM 202, and obtains a difference from the target size of the object, which will be described below. Next, the CPU 201 determines the zoom magnification to the telephoto side or the wide-angle side according to the difference.

The workstation 200 operates so that the object size becomes the target size during the automatic tracking. That is, the target size is the object size that is used as a reference in a case where the workstation 200 determines the zoom magnification.

The zoom magnification may be a velocity (speed) at which a distance in the zoom lens unit in the camera 100 is changed, or may be a digital zoom magnification realized by image processing.

In a case where the reasoning unit 207 detects a plurality of second objects in addition to the object to be tracked, the zoom magnification may be determined to such an extent that the second objects do not go out of the frame. Thereby, imaging of the plurality of objects and the size of the target to be tracked can be maintained.

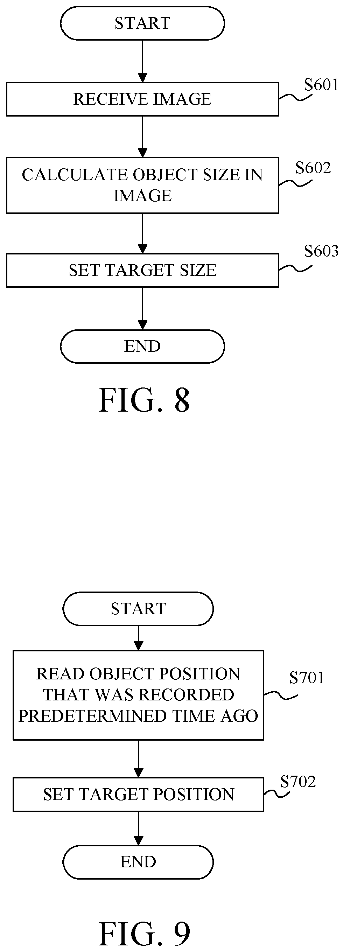

FIG. 8 is a flowchart illustrating processing for setting the zoom magnification by the workstation 200 according to this embodiment.

In step S601, the CPU 201 receives an image from the camera 100 via the image input I/F 208 and stores it into the RAM 202.

In step S602, the CPU 201 reads out the image from the RAM 202 and calculates the object size in the image.

In step S603, the CPU 201 sets the object size calculated in step S602 as the target size for capturing the object during automatic tracking, and writes it into the RAM202.

By determining the tracking target size in a case where the operator switches from manual operation to automatic tracking, the configuration of this embodiment can capture continuous images before and after switching without any uncomfortable sense.

### THIRD EMBODIMENT

This embodiment will discuss an example in which the target position is determined using the object position in a case where there is a significant difference between the time when the user instructs automatic tracking switching and the time when the workstation 200 receives the switching signal. This time difference occurs due to communication latency due to transmission and reception of signals on the network and the time required for internal processing of the controller 300 and camera 100. The internal processing of the camera 100 is, for example, imaging processing and image output processing.

The system according to this embodiment assumes that the camera 100 and workstation 200 are installed at physically close positions, and the controller 300 is installed at a remote location away from the camera 100 and workstation 200. In this case, latency may occur in communication between the controller 300 and the camera 100 or the workstation 200.

The communication latency tends to increase as the distance between the controller 300 operated by the operator and the camera 100 increases. In addition to the communication latency, the latency increases in a case where a large number of unillustrated relay devices intervene between the camera 100 and the controller 300.

As the latency increases, an image captured by the camera 100 reaches the remote operator with a long delay, and the camera control instruction sent by the operator reaches the camera 100 with a long delay. Due to this time difference, the object position in the image that the operator visually recognizes when the operator instructs to start automatic imaging and the object position in the image when the workstation 200 receives the automatic tracking start signal may be different. In this case, in a case where the object position at the time when the workstation 200 receives the automatic tracking start signal is set as the target position for automatic tracking as in the first and second embodiments, the object position during automatic tracking in the image may be different from the position intended by the operator.

Accordingly, in this embodiment, in a case where the workstation 200 receives the automatic tracking start signal, the workstation 200 sets the target position of the object using the image that was acquired a predetermined time ago.

FIG. 9 is a flowchart illustrating the operation of the workstation 200 according to this embodiment. The CPU201 will start the flow of FIG. 9 in a case where the CPU 201 receives the automatic tracking start signal through user input I/F206 or network I/F204.

In step S701, the CPU 201 reads out of the RAM 202 the object position that was recorded a predetermined time before the CPU 201 receives the automatic tracking start signal. The predetermined time corresponds to the difference between the time when the image was captured and the time when the operator transmitted the automatic tracking start signal, and may be previously stored as a fixed value in the ROM 203, or may be set based on the designation from the user via the user input I/F 206.

The CPU 201 may measure the time required for communication by transmitting/receiving a communication delay measurement signal to/from the controller 300 via the network I/F 204, and set the measured time as the predetermined time.

In a case where the Internet 600 that causes a main communication delay is commonly used, the time required for communication between an apparatus near the workstation 200 and an apparatus near the controller 300 may be set as the predetermined time. For example, the time required for communication between a device connected to the LAN 400 and a device connected to the LAN 500 may be set as the predetermined time.

By receiving information about the time when the image visually recognized by the user was captured in switching the automatic tracking together with the automatic tracking start signal, the CPU 201 may read the object position at the corresponding time out of the RAM 202.

In step S702, the CPU 201 sets the object position acquired in step S701 as the target position.

In order to acquire the object position from the RAM 202 in step S701, the reasoning unit 207 is to always detect the object position and continuously store it in the RAM 202 even in the manual operation state ST1. Since image recognition processing for detecting an object in an image generally has a large computational load, it may cause a heavy burden on computational resources of the workstation 200 and increase power consumption. Therefore, the detection processing time for the reasoning unit 207 may be short.

Accordingly, in the manual operation state ST1, the CPU 201 may store only images of the camera 100 received via the image input I/F 208 in the RAM 202, and in step S701, acquire an image from the RAM 202 that was recorded a predetermined time ago. Thereafter, the CPU 201 may acquire the object position from the detection result of the reasoning unit 207 using the acquired image.

The configuration of this embodiment can set the object position to a proper position specified by the operator, even if there is a significant difference between the time when the user instructs automatic tracking switching and the time when the workstation 200 receives the switching signal.

Although the workstation 200 executes automatic tracking control of the camera 100 in each embodiment, this embodiment is not limited to this example. For example, the camera 100 and the controller 300 may have the functions of the workstation 200.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a readonly memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

Each embodiment can provides a control apparatus that can provide imaging at an angle of view in accordance with the intention of the operator with a simple operation in switching from manual imaging to automatic imaging.

A control apparatus (201) for a system configured to transition between a first state for changing an angle of view of an image pickup apparatus (100) according to an operation of a user and a second state for changing the angle of view so that an object is displayed at a target position on an image includes an acquiring unit (201a) configured to acquire a position of the object on the image, and a determining unit (201b) configured to determine the target position based on the position of the object on the image in a case where the system transitions from the first state to the second state.

## Claims

1. A control apparatus (201) for a system configured to transition between a first state for changing an angle of view of an image pickup apparatus (100) according to an operation of a user and a second state for changing the angle of view so that an object is displayed at a target position on an image, the control apparatus comprising:
an acquiring unit (201a) configured to acquire a position of the object on the image; and
a determining unit (201b) configured to determine the target position based on the position of the object on the image in a case where the system transitions from the first state to the second state.

2. The control apparatus according to claim 1, **characterized in that** the determining unit determines as the target position the position of the object on the image when the system transitions from the first state to the second state.

3. The control apparatus according to claim 1 or 2, **characterized in that** the determining unit determines a center position of the image as the target position in a case where the object is moving when the system transitions from the first state to the second state, and determines as the target position the position of the object on the image when the system transitions from the first state to the second state in a case where the object is stationary.

4. The control apparatus according to any one of claims 1 to 3, **characterized in that** in the second state, the angle of view is changed so that a size of the object in the image approaches a target size,
wherein the acquiring unit acquires the size of the obj ect in the image, and
wherein the determining unit determines as the target size the size of the object in the image when the system transitions from the first state to the second state.

5. The control apparatus according to claim 1, **characterized in that** the determining unit determines as the target position one of a plurality of positions of the object acquired by the acquiring unit and recorded before the system transitions from the first state to the second state.

6. The control apparatus according to claim 5, **characterized in that** the determining unit determines as the target position the position of the object that was recorded a predetermined time before the system transitions from the first state to the second state.

7. The control apparatus according to claim 6, **characterized in that** the predetermined time is based on a difference between a time when the system is instructed to transition from the first state to the second state, and a time when the system transitions from the first state to the second state.

8. The control apparatus according to any one of claims 5 to 8, further comprising a recorder (202) configured to record positions of the plurality of obj ects.

9. The control apparatus of any one of claims 1 to 8, further comprising the image acquiring unit (208) configured to acquire the image.

10. The control apparatus according to any one of claims 1 to 10, further comprising a detector (207) configured to detect the position of the object using the image.

11. An image pickup apparatus (100) for a system configured to transition between a first state for changing an angle of view of the image pickup apparatus according to an operation of a user and a second state for changing the angle of view so that an object is displayed at a target position on an image, the image pickup apparatus comprising:
an imaging unit (107) configured to capture the object;
an acquiring unit (201a) configured to acquire a position of the object on the image, and
a determining unit (201b) configured to determine the target position based on the position of the object on the image in a case where the system transitions from the first state to the second state.

12. A system comprising:
an image pickup apparatus (100) including an imaging unit configured to capture an object;
an operation apparatus (300) configured to operate the image pickup apparatus; and
the control apparatus (201) according to any one of claims 1 to 10.

13. A control method for a system configured to transition between a first state for changing an angle of view of an image pickup apparatus (100) according to an operation of a user and a second state for changing the angle of view so that an object is displayed at a target position on an image, the control method comprising the steps of:
acquiring a position of the object on the image, and
determining the target position based on the position of the object on the image in a case where the system transitions from the first state to the second state.

14. A program that causes a computer to execute the control method according to claim 13.
